# EUROPEAN PATENT SPECIFICATION

(11) **EP 4 109 822 B1**
(45) Date of publication and mention of the grant of the patent: **30.09.2026**
(21) Application number: 21777080.9
(22) Date of filing: 16.03.2021
(51) Int. Cl.: H04L 43/0817, G06F 11/07, H04L 12/28, H04L 41/0677, H04L 41/0806, H04L 41/0681, H04L 43/50, H04L 41/0631, H04L 41/0654

(54) **FAULT DETECTION METHOD AND DEVICE, COMPUTER-READABLE STORAGE MEDIUM AND FAULT DETECTION SYSTEM**
FEHLERERKENNUNGSVERFAHREN UND -VORRICHTUNG, COMPUTERLESBARES SPEICHERMEDIUM UND FEHLERERKENNUNGSSYSTEM
PROCÉDÉ ET DISPOSITIF DE DÉTECTION DE DÉFAILLANCE, SUPPORT D'ENREGISTREMENT LISIBLE PAR ORDINATEUR ET SYSTÈME DE DÉTECTION DE DÉFAILLANCE

(30) Priority: 27.03.2020 CN 202010232312
(43) Date of publication of application: 28.12.2022
(73) Proprietor: Huawei Technologies Co., Ltd., Shenzhen, Guangdong 518129, (CN)
(72) Inventor: ZHANG, Zhetao, Shenzhen, Guangdong 518129 (CN); SUN, Xue, Shenzhen, Guangdong 518129 (CN); TANG, Yan, Shenzhen, Guangdong 518129 (CN)
(74) Representative: Pfenning, Meinig & Partner mbB
(86) International application number: PCT/CN2021/081091
(87) International publication number: WO 2021/190357

(56) References cited:
- CN-A- 102 306 244
- CN-A- 109 179 211
- CN-A- 110 728 013
- KR-A- 20160 044 625
- US-A1- 2011 047 418
- US-A1- 2019 297 401
- US-B2- 7 321 989
- WU ZHEN-YU, ZHU CHAO-FENG: "Fault diagnosis and recovery based on fault tree analysis", SHIP & BOAT, INTERNATIONAL SUMMIT FORUM ON SHIP INTELLIGENT ENERGY EFFICIENCY TECHNOLOGY, PROCEEDINGS, no. 02, 25 April 2016 (2016-04-25), pages 31 - 35, XP055853650, ISSN: 1001-9855, DOI: 10.19423/j.cnki.31-1561/u.2016.02.006

## Description

### TECHNICAL FIELD

Embodiments of this application relate to the communications field, and in particular, to a fault detection method and device, a computer-readable storage medium and a fault detection system.

### BACKGROUND

With development of communications technologies, increasingly more intelligent devices are applied to people's life and work. In an application scenario of a plurality of intelligent devices, once any intelligent device is faulty, a manual check manner is usually used in the conventional technology, that is, a technician provides a door-to-door service to check and repair a fault. In a check process, the technician usually performs manual check on the intelligent devices one by one. For example, the technician connects a computer to detection interfaces of the intelligent devices, and checks the intelligent devices.

This manual check manner has problems of low efficiency and cumbersomeness. In addition, with an increase in the intelligent devices, a probability of fault occurrence gradually increases. If the technician needs to perform door-to-door check and repair each time, user experience is poor and costs are high.

US 2011/047418 A1 discloses a method of detecting faults in a building management system. The method comprises: at a computer of the building management system, using a stored rule condition to detect a first fault in the building management system; using the computer to determine a need for a threshold adjustment based on at least one of fault detection data or building management system performance data; determining a new threshold value for the rule condition; adjusting the stored rule condition to utilize the new threshold value; and at the computer, using the adjusted rule condition to detect a second fault in the building management system.

US 2019/297401 A1 discloses a method of a server for managing a home network. The method includes: storing an operation state of at least one electronic apparatus in the home network and reference sensing data for each of a plurality of sensors, receiving sensing data from the plurality of sensors, determining the operation state of the at least one electronic apparatus, and comparing the stored reference sensing data corresponding to the determined operation state with the received sensing data, and determining whether an error occurs in the plurality of sensors and the at least one electronic apparatus.

KR 2016 0044625 A discloses a system for detecting a fault of a device in a home network. The system comprises: a fault detection device which is mounted on a device in a home network, and collects faulty hardware of the device and a condition of the hardware to transmit a result; and a management server to receive the result from the fault detection device to transfer the result to a display device.

### SUMMARY

The invention is set out in the appended set of claims. This application provides a fault detection method and device, a computer-readable storage medium and a fault detection system, to implement automatic fault check on a plurality of to-be-detected devices.

To achieve the foregoing objective, this application uses the following technical solutions.

According to a first aspect, an embodiment of this application provides a fault detection method applied to a fault detection device. The method includes: obtaining first detection logic, where the first detection logic includes a plurality of detection events and is used to indicate a logical relationship between the plurality of detection events, and a single detection event includes identification information of a to-be-detected device, a detection instruction, and identification information of a fault event; in response to the obtained first detection logic, successively executing corresponding detection instructions on to-be-detected devices in single detection events based on the logical relationship between the plurality of detection events, and receiving an execution result returned by each to-be-detected device; and if it is detected that the execution result includes the identification information of the fault event, determining that the fault event exists. The fault detection device and the to-be-detected devices are different devices.

In the foregoing manner, automatic fault check on the to-be-detected device is implemented according to the detection instruction in the detection logic, and whether the fault event exists is determined based on the identification information of the fault event. Therefore, the automatic fault check on the to-be-detected device is implemented.

In a possible implementation, the obtaining detection logic includes: receiving a plurality of pieces of second detection logic from a server and storing the plurality of pieces of second detection logic, where the first detection logic is included in the plurality of pieces of second detection logic, and each piece of single second detection logic includes a trigger condition and the plurality of detection events; and locally obtaining one or more pieces of second detection logic if it is detected that one or more trigger conditions of the one or more pieces of second detection logic are triggered.

In the foregoing manner, a fault detection device may obtain a plurality of pieces of detection logic from the server end in advance, and execute one or more pieces of corresponding detection logic based on different trigger conditions.

In a possible implementation, the single detection event further includes a solution corresponding to the fault event, and the method further includes: obtaining, based on the identification information of the fault event, the solution corresponding to the fault event; and displaying the solution.

In the foregoing manner, a fault detection device may obtain, in advance, the solution corresponding to the fault event, and display the solution after detecting that the fault event exists, so that a user can maintain a faulty device based on an actual situation.

In a possible implementation, the method further includes: indicating to a server that the fault event exists; receiving a solution that corresponds to the fault event and that is sent by the server; and displaying the solution.

In the foregoing manner, a fault detection device may report the fault event to the server after finding the fault event, so that a worker obtains the fault event in time and provides the corresponding solution.

In a possible implementation, the first detection logic is a first detection logical tree, or the first detection logic is a first detection logic list.

In the foregoing manner, the detection logic is stored in different manners. For example, the detection logic may be stored in a manner of a logical tree, that is, each logic branch represents a logical relationship between detection events. For example, the detection logic may alternatively be stored in a manner of a logic list, that is, a list represents a logical relationship between detection events.

According to a second aspect, an embodiment of this application provides a fault detection device. The device includes a memory and a processor. The memory is coupled to the processor. The memory stores program instructions, and when the program instructions are executed by the processor, the program instructions cause the processor of the fault detection device to perform the method according to any one of the first aspect or the possible implementations of the first aspect.

According to a third aspect, an embodiment of this application provides a computer-readable medium, configured to store a computer program. The computer program includes instructions used to perform the method according to any one of the first aspect or the possible implementations of the first aspect.

According to a fourth aspect, an embodiment of this application provides a fault detection system. The system includes the fault detection device and the to-be-detected device in the first aspect.

### BRIEF DESCRIPTION OF DRAWINGS

To describe technical solutions in embodiments of this application more clearly, the following briefly introduces accompanying drawings for describing embodiments of this application. It is clear that the accompanying drawings in the following descriptions show merely some embodiments of this application, and a person of ordinary skill in the art may still derive other drawings from these accompanying drawings without creative efforts.
FIG. 1 is a schematic diagram of an application scenario according to an embodiment of this application;
FIG. 2 is a schematic diagram of a structure of an example of a mobile phone;
FIG. 3 is a block diagram of a structure of a fault detection system according to an embodiment of this application;
FIG. 4 is a schematic diagram of a structure of an example of a logical tree;
FIG. 5 is a schematic diagram of an example of a user interface;
FIG. 6 is a schematic diagram of an example of an application scenario;
FIG. 7 is a schematic flowchart of a fault detection method according to an embodiment of this application;
FIG. 8 is a schematic diagram of a structure of an example of a logical tree;
FIG. 9 is a schematic flowchart of an example of a fault detection method;
FIG. 10 is a schematic diagram of an example of an application scenario;
FIG. 11 is a schematic flowchart of a fault detection method;
FIG. 12 is a schematic diagram of a structure of a fault detection device according to an embodiment of this application; and
FIG. 13 is a schematic diagram of a structure of a fault detection device according to an embodiment of this application.

### DESCRIPTION OF EMBODIMENTS

The following clearly and completely describes technical solutions in embodiments of this application with reference to accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship for describing associated objects and represents that three relationships may exist. For example, A and/or B may represent the following three cases: Only A exists, both A and B exist, and only B exists.

In the specification and claims in embodiments of this application, terms "first", "second", and the like are intended to distinguish between different objects but do not indicate a particular order of the objects. For example, a first target object, a second target object, and the like are intended to distinguish between different target objects but do not indicate a particular order of the target objects.

In embodiments of this application, the word such as "example" or "for example" is used to represent giving an example, an illustration, or a description. Any embodiment or design solution described as an "example" or "for example" in embodiments of this application should not be explained as being more preferred or having more advantages than another embodiment or design solution. Exactly, use of the word "example", "for example", or the like is intended to present a relative concept in a specific manner.

In descriptions of embodiments of this application, unless otherwise stated, "a plurality of" means two or more. For example, a plurality of processing units are two or more processing units. A plurality of systems are two or more systems.

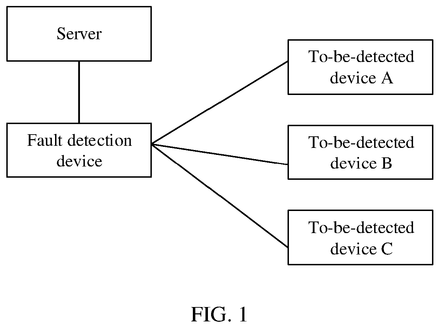

Before the technical solutions in embodiments of this application are described, a communications system in embodiments of this application is first described with reference to the accompanying drawings. FIG. 1 is a schematic diagram of a communications system according to an embodiment of this application. The communications system includes a fault detection device, a server, and at least one to-be-detected device. The at least one to-be-detected device includes a to-be-detected device A, a to-be-detected device B, and a to-be-detected device C. It should be noted that in actual application, there may be one or more servers, one or more fault detection devices, and one or more to-be-detected devices. Quantities of devices in the communications system shown in FIG. 1 are merely examples. This is not limited in this application.

A fault detection method provided in embodiments of this application may be applied to an electronic device with wireless communication and display functions, such as a mobile phone, a tablet computer, a wearable device, a vehicle-mounted device, an augmented reality (augmented reality, AR)/virtual reality (virtual reality, VR) device, a notebook computer, an ultra-mobile personal computer (ultra-mobile personal computer, UMPC), a netbook, or a personal digital assistant (personal digital assistant, PDA), a smart television, and a smart refrigerator.

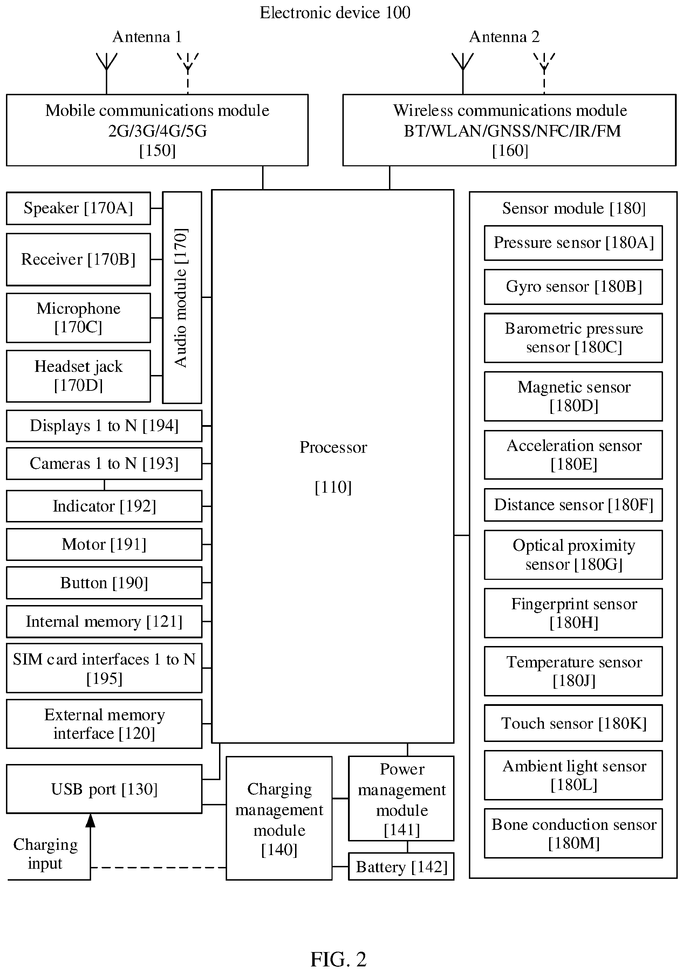

For example, FIG. 2 is a schematic diagram of a structure of a mobile phone 100 when a fault detection device is a mobile phone. The mobile phone 100 may include a processor 110, an external memory interface 120, an internal memory 121, a universal serial bus (universal serial bus, USB) port 130, a charging management module 140, a power management module 141, a battery 142, an antenna 1, an antenna 2, a mobile communications module 150, a wireless communications module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of this application does not constitute a specific limitation on the mobile phone 100. In some other embodiments of this application, the mobile phone 100 may include more or fewer components than those shown in the figure, or combine some components, or split some components, or have different component arrangements. The components shown in the figure may be implemented by hardware, software, or a combination of software and hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video codec, a digital signal processor (digital signal processor, DSP), a baseband processor, and/or a neural-network processing unit (neural-network processing unit, NPU). Different processing units may be independent components, or may be integrated into one or more processors.

The controller may be a nerve center and a command center of the mobile phone 100. The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store instructions or data that has been used or cyclically used by the processor 110. If the processor 110 needs to use the instructions or the data again, the processor 110 may directly invoke the instructions or the data from the memory. This avoids repeated access, reduces waiting time of the processor 110, and improves system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) port, and/or the like.

The USB port 130 is a port that conforms to a USB standard specification, and may be specifically a mini USB port, a micro USB port, a USB Type-C port, or the like. The USB port 130 may be configured to connect to a charger to charge the mobile phone 100, or may be configured to perform data transmission between the mobile phone 100 and a peripheral device. The USB port 130 may alternatively be configured to connect to a headset, to play an audio through the headset. The port may alternatively be configured to connect to another electronic device such as an AR device.

It may be understood that an interface connection relationship between the modules shown in this embodiment of this application is merely an example for description, and does not constitute a limitation on the structure of the mobile phone 100. In some other embodiments of this application, the mobile phone 100 may alternatively use an interface connection manner different from that in the foregoing embodiment, or use a combination of a plurality of interface connection manners.

The charging management module 140 is configured to receive a charging input from a charger. The charger may be a wireless charger or a wired charger. In some embodiments of wired charging, the charging management module 140 may receive a charging input of the wired charger through the USB port 130. In some embodiments of wireless charging, the charging management module 140 may receive a wireless charging input by using a wireless charging coil of the mobile phone 100. The charging management module 140 supplies power to the mobile phone by using the power management module 141 while charging the battery 142.

The power management module 141 is configured to connect to the battery 142, the charging management module 140, and the processor 110. The power management module 141 receives an input of the battery 142 and/or the charging management module 140, to supply power to the processor 110, the internal memory 121, an external memory, the display 194, the camera 193, the wireless communications module 160, and the like. The power management module 141 may be further configured to monitor parameters such as a battery capacity, a battery cycle count, and a battery health status (electricity leakage or impedance). In some other embodiments, the power management module 141 may alternatively be disposed in the processor 110. In some other embodiments, the power management module 141 and the charging management module 140 may alternatively be disposed in a same device.

A wireless communication function of the mobile phone 100 may be implemented by using the antenna 1, the antenna 2, the mobile communications module 150, the wireless communications module 160, the modem processor, the baseband processor, and the like.

The mobile phone 100 may implement an audio function such as music playing or recording by using the audio module 170, the speaker 170A, the receiver 170B, the microphone 170C, the headset jack 170D, the application processor, and the like.

The audio module 170 is configured to convert digital audio information into an analog audio signal for output, and is also configured to convert an analog audio input into a digital audio signal. The audio module 170 may be further configured to: code and decode an audio signal. In some embodiments, the audio module 170 may be disposed in the processor 110, or some functional modules of the audio module 170 are disposed in the processor 110.

The speaker 170A, also referred to as a "horn", is configured to convert an audio electrical signal into a sound signal. The mobile phone 100 may listen to music or answer a hands-free call by using the speaker 170A.

The receiver 170B, also referred to as an "earpiece", is configured to convert the audio electrical signal into the sound signal. When a call is answered or voice information is received by using the mobile phone 100, the receiver 170B may be put close to a human ear to listen to a voice.

The microphone 170C, also referred to as a "mike" or a "mic", is configured to convert a sound signal into an electrical signal. When making a call or sending voice information, a user may make a sound near the microphone 170C through the mouth of the user, to input the sound signal to the microphone 170C. One or more microphones 170C may be disposed in the mobile phone 100. In some other embodiments, two microphones 170C may be disposed in the mobile phone 100, to collect a sound signal and further implement a noise reduction function. In some other embodiments, three, four, or more microphones 170C may alternatively be disposed in the mobile phone 100, to collect a sound signal, reduce noise, further identify a sound source, implement a directional recording function, and the like.

The headset jack 170D is configured to connect to a wired headset. The headset jack 170D may be the USB port 130, or may be a 3.5 mm open mobile terminal platform (open mobile terminal platform, OMTP) standard interface or cellular telecommunications industry association of the USA (cellular telecommunications industry association of the USA, CTIA) standard interface.

The mobile phone 100 implements a display function by using the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs that execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light emitting diode (active-matrix organic light emitting diode, AMOLED), a flexible light-emitting diode (flexible light-emitting diode, FLED), a mini-LED, a micro-LED, a micro-OLED, a quantum dot light emitting diode (quantum dot light emitting diode, QLED), or the like. In some embodiments, the mobile phone 100 may include one or N displays 194, where N is a positive integer greater than 1.

The mobile phone 100 may implement a photographing function by using the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise, brightness, and complexion of the image. The ISP may further optimize parameters such as exposure and a color temperature of a photographing scenario. In some embodiments, the ISP may be disposed in the camera 193.

The camera 193 may be configured to capture a static image or a video. An optical image of an object is generated through the lens, and is projected onto the photosensitive element. The photosensitive element may be a charge coupled device (charge coupled device, CCD) or a complementary metal-oxide-semiconductor (complementary metal-oxide-semiconductor, CMOS) photoelectric transistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format such as RGB or YUV. In some embodiments, the mobile phone 100 may include one or N cameras 193, where N is a positive integer greater than 1.

The digital signal processor is configured to process a digital signal, and may process another digital signal in addition to processing the digital image signal. For example, when the mobile phone 100 selects a frequency, the digital signal processor is configured to perform Fourier transform on frequency energy, and the like.

The video codec is configured to: compress or decompress a digital video. The mobile phone 100 may support one or more video codecs. In this way, the mobile phone 100 may play or record videos in a plurality of coding formats, for example, moving picture experts group (moving picture experts group, MPEG)-1, MPEG-2, MPEG-3, and MPEG-4.

The NPU is a neural-network (neural-network, NN) computing processor. The NPU quickly processes input information with reference to a structure of a biological neural network, for example, with reference to a transfer mode between human brain neurons, and may further continuously perform self-learning. Applications such as intelligent cognition of the mobile phone 100 may be implemented by using the NPU, for example, image recognition, facial recognition, speech recognition, and text understanding.

The external memory interface 120 may be configured to connect to an external storage card, for example, a Micro SD card, to extend a storage capability of the mobile phone 100. The external storage card communicates with the processor 110 through the external memory interface 120, to implement a data storage function. For example, files such as music and a video are stored in the external storage card.

The internal memory 121 may be configured to store computer-executable program code. The executable program code includes instructions. The processor 110 runs the instructions stored in the internal memory 121, to perform various function applications of the mobile phone 100 and data processing. The internal memory 121 may include a program storage area and a data storage area. The program storage area may store an operating system, an application required by one or more functions (for example, a sound play function and an image play function), and the like. The data storage area may store data (such as audio data and ann address book) and the like created during use of the mobile phone 100. In addition, the internal memory 121 may include a high-speed random access memory, and may further include a nonvolatile memory, for example, one or more magnetic disk storage devices, a flash memory device, a universal flash storage (universal flash storage, UFS), or the like.

The button 190 includes a power button, a volume button, and the like. The button 190 may be a mechanical button, or may be a touch button. The mobile phone 100 may receive a key input, and generate a key signal input related to a user setting and function control of the mobile phone 100.

The motor 191 may generate a vibration prompt. The motor 191 may be configured to provide an incoming call vibration prompt, or may be configured to provide a touch vibration feedback. For example, touch operations performed on different applications (for example, photographing and audio play) may correspond to different vibration feedback effects. The motor 191 may also correspond to different vibration feedback effects for touch operations performed on different areas of the display 194. Different application scenarios (for example, a time reminder, information receiving, an alarm clock, and a game) may also correspond to different vibration feedback effects. A touch vibration feedback effect may be further customized.

The indicator 192 may be an indicator lamp, and may be configured to indicate a charging status and a power change, or may be configured to indicate a message, a missed call, a notification, and the like.

The SIM card interface 195 is configured to connect to a SIM card. The SIM card may be inserted into the SIM card interface 195 or removed from the SIM card interface 195, to implement contact with or separation from the mobile phone 100. The mobile phone 100 may support one or N SIM card interfaces, where N is a positive integer greater than 1. The SIM card interface 195 may support a nano-SIM card, a micro-SIM card, a SIM card, and the like. A plurality of cards may be simultaneously inserted into a same SIM card interface 195. The plurality of cards may be of a same type or of different types. The SIM card interface 195 may be compatible with different types of SIM cards. The SIM card interface 195 may also be compatible with an external storage card. The mobile phone 100 interacts with a network by using the SIM card, to implement functions such as calling and data communication. In some embodiments, the mobile phone 100 uses an eSIM, that is, an embedded SIM card. The eSIM card may be embedded in the mobile phone 100, and cannot be separated from the mobile phone 100.

A specific implementation solution of this application is described below with reference to the schematic diagram of the application scenario shown in FIG. 1.

Specifically, this application provides a fault detection method. In the method, a fault detection device performs automatic fault check on one or more to-be-detected devices in a current application scenario in different application scenarios, and notifies a user of a fault point in the current application scenario, and a fault cause and/or a fault solution in time. Therefore, the user can independently determine a fault event by using the fault detection device without requiring a professional person, and the user can independently repair the fault point based on the fault cause and/or the solution provided by the fault detection device, or can provide the fault event for a technician, so that the technician can quickly check and repair the fault point.

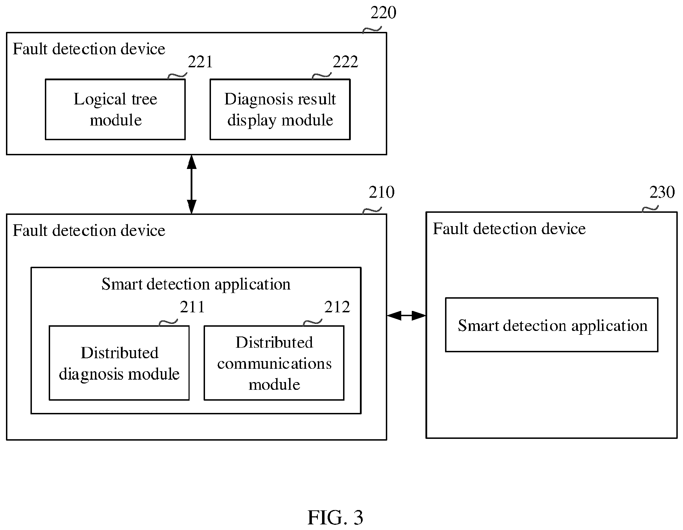

Specifically, FIG. 3 is a block diagram of a structure of a fault detection system according to this application. Refer to FIG. 3. The fault detection system includes a fault detection device 210, a server 220, and a to-be-detected device 230. It should be noted that the to-be-detected device 230 shown in FIG. 3 may be any to-be-detected device in the application scenario in FIG. 1, for example, may be the to-be-detected device A, the to-be-detected device B, or the to-be-detected device C in FIG. 1. In FIG. 3, only one of the to-be-detected devices is used as an example for description.

Specifically, the server 220 includes a logical tree module 221. Optionally, the server 220 may further include a diagnosis result display module 222.

For example, the fault tree module 221 is configured to store fault detection logic information. The fault detection logic information includes but is not limited to identification information of a to-be-detected device, a detection instruction, and identification information of a fault event corresponding to each fault detection instruction, and the fault detection logic information is further used to indicate a logical relationship between detection instructions. The logical relationship includes a parallel relationship and/or a sequence relationship, that is, functions of the to-be-detected device may be checked one by one based on the logical relationship indicated by the fault detection logic information. For example, the fault detection logic may be stored in a form of a logical tree. For example, the fault detection logic may alternatively be stored in a list manner. This is not limited in this application.

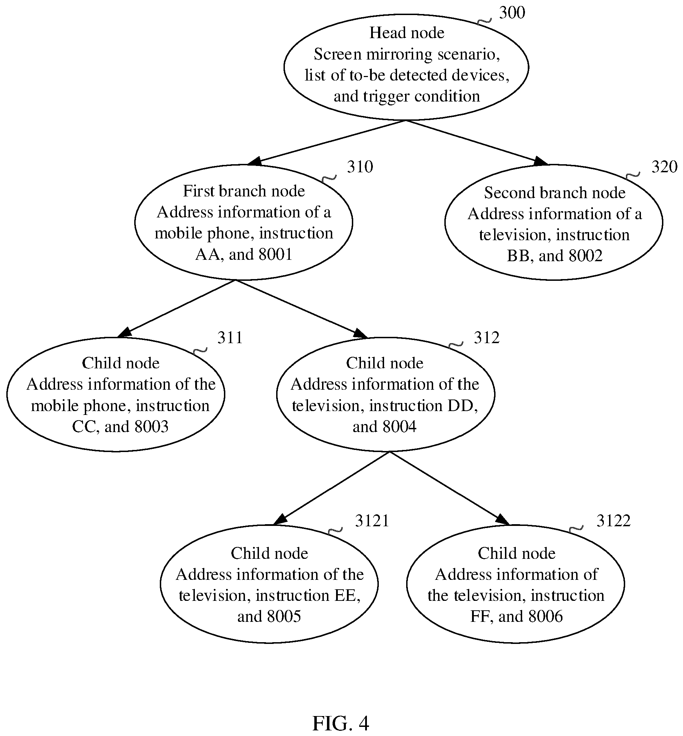

FIG. 4 is a schematic diagram of a structure of an example of a logical tree. Refer to FIG. 4. The logical tree includes a head node 300. The head node 300 may include but is not limited to application scenario identification information, identification information of each device in an application scenario, and a trigger condition for triggering the logical tree.

Optionally, the application scenario identification information may be a name of an application scenario, for example, a home scenario, a screen mirroring scenario, or a motion scenario.

Optionally, the identification information of each device in the application scenario is identification information of a to-be-detected device on which fault detection needs to be performed in the application scenario. For example, the identification information may be information used to identify the device, such as a name of the device or address information of the device.

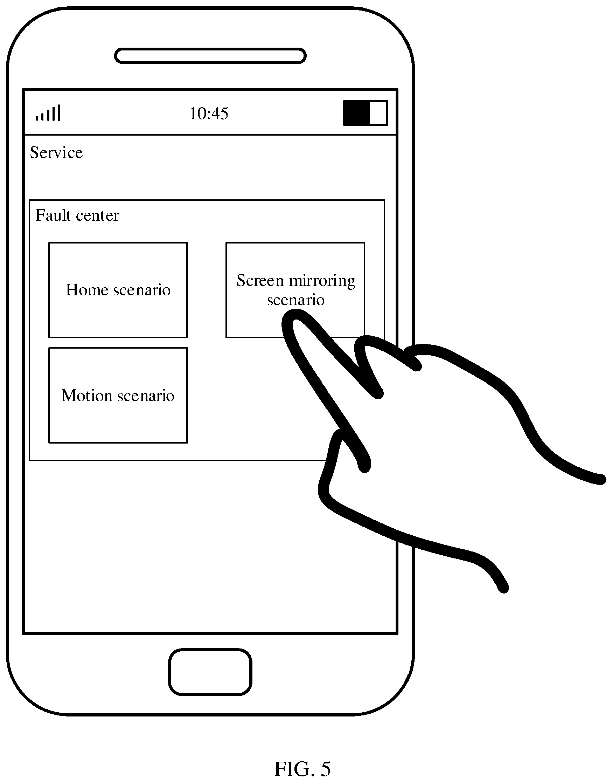

Optionally, the trigger condition of the logical tree is used to indicate whether to execute the logical tree. That is, when detecting that an event meeting the trigger condition exists, the fault detection device 210 performs a corresponding detection process based on the logical tree to which the trigger condition belongs. In an example, the trigger condition may be an automatic trigger condition. For example, a trigger condition of a logical tree A is an unlock event. That is, after the fault detection device 210 detects the unlock event, specifically, after the fault detection device 210 receives an unlock message sent by a smart lock, the fault detection device 210 determines that the trigger condition of the logical tree A is met, and executes an instruction of the logical tree A. In another example, the trigger condition may be manually triggering an application scenario. That is, a user may manually select an application scenario to trigger a logical tree corresponding to the application scenario. For example, the user may select a corresponding application scenario by using a fault detection option provided on a screen. As shown in FIG. 5, the user selects a screen mirroring scenario. After identifying a touch operation of the user, the fault detection device 210 determines that a current scenario is the screen mirroring scenario, and obtains a logical tree corresponding to the screen mirroring scenario.

Still refer to FIG. 4. The logical tree 300 further includes at least one branch. For example, the head node 300 includes a first branch node 310 and a second branch node 320. For example, the first branch node 310 and the second branch node 320 each may include but are not limited to identification information of a to-be-detected device, a detection instruction, and identification information of a fault event. For example, the first branch node 310 includes a child node 311 and a child node 312. The child node 312 further includes a child node 3121 and a child node 3122.

In a possible implementation, each child node includes identification information of a to-be-detected device, a detection instruction, and identification information of a fault event.

In another possible implementation, if targets detected by a child node and a parent node are a same to-be-detected device, the child node may not include the identification information of the to-be-detected device, that is, the child node inherits the identification information of the to-be-detected device to be detected by the parent node.

For example, the first branch node 310 includes address information of a mobile phone, an instruction AA, and identification information 8001 of a fault event. The detection instruction AA is used to indicate to query a network-connected status of the mobile phone, and the identification information 8001 of the fault event is used to indicate that a network-connected status fault event of the mobile phone exists. That is, if a response message that is returned by the mobile phone and that is received by the to-be-detected device includes code (or an indication) 8001, it may be determined that the network-connected status fault event of the mobile phone exists.

Refer to FIG. 4. A logical relationship between the second branch node 320 and the first branch node 310 is a parallel relationship, that is, the first branch node 310 and the second branch node 320 are executed in parallel, or it may be understood that there is no specific sequence in executing the first branch node 310 and the second branch node 320. For example, the second branch node 320 includes address information of a television, an instruction BB, and identification information 8002 of a fault event. The instruction BB is used to indicate to query a network-connected status of the television, and the identification information 8002 of the fault event is used to indicate that a network-connected status fault event of the mobile phone exists. That is, if a response message that is returned by the television and that is received by the to-be-detected device includes code 8002, it may be determined that the network-connected fault event of the television exists.

For example, the child node 311 includes the address information of the mobile phone, an instruction CC, and identification information 8003 of a fault event. The instruction CC is used to indicate to query a data sending status of the mobile phone, and the identification information 8003 of the fault event is used to indicate that a data sending fault event of the mobile phone exists.

For example, the child node 312 and the child node 311 are executed in parallel, and a logical relationship between the child node 312 and the child node 311 is also a parallel relationship. For example, the child node 312 includes the address information of the television, an instruction DD, and identification information 8004 of a fault event. The instruction DD is used to indicate to query a data receiving status of the television, and the identification information 8004 of the fault event is used to indicate that a data receiving fault event of the television exists.

For example, the child node 312 includes the child node 3121 and the child node 3122. The child node 312 may also be understood as a parent node of the child node 3121 and the child node 3122. For example, the child node 3121 includes the address information of the television, an instruction EE, and identification information 8005 of a fault event. The instruction EE is used to indicate to query a decoding status of the television, and the identification information 8005 of the fault event is used to indicate that a decoding fault event of the television exists.

For example, a logical relationship between the child node 3122 and the child node 3121 is parallel relationship. For example, the child node 3122 includes the address information of the mobile phone, an instruction FF, and identification information 8006 of a fault event. The instruction FF is used to indicate to query a display status of the television, and the identification information 8006 of the fault event is used to indicate that a display status fault event of the television exists.

In a possible implementation, the logical relationship in the logical tree is used to indicate an instruction execution sequence. Parallel nodes are not executed in a specific sequence. For a parent node and child nodes on a branch, the parent node is executed first, and then the child nodes under the parent node are executed.

In a possible implementation, if the fault detection device detects a fault event indicated by a parent node, the fault detection device stops running other child nodes under the parent node, and performs a subsequent fault feedback procedure. For example, if the fault detection device 210 determines, after executing the child node 312, that the data receiving fault event of the television exists, the fault detection device 210 may stop executing other child nodes under the child node 312.

In a possible implementation, the fault detection device 210 may execute the instructions on the nodes one by one based on the logical relationships in the logical tree, and receive the response messages returned by the to-be-detected devices. For example, the fault detection device 210 may determine, based on each piece of identification information of a fault event in a process of executing the logical tree or after all nodes are executed, whether the fault event exists.

It should be noted that the fault event in this application may also be understood as an abnormal state. For example, a display fault event of the television may also be understood as abnormal display of the television.

It should be further noted that quantities of nodes in the logical tree in FIG. 4 and the instructions and the identification information of the fault events included in the nodes are merely examples, and different application scenarios and a plurality of devices in the application scenarios may correspond to different logical trees. In addition, the logical relationship between the nodes in the logical tree is preset by a person skilled in the art, and may be set based on an actual requirement. This is not limited in this application. A specific application of the logical tree is described in detail in the following embodiments.

Still refer to FIG. 3. Optionally, in this application, when detecting that a fault event exists, the fault detection device 210 may send identification information of the fault event to the server 220, and the server 220 may display the received identification information of the fault event by using the diagnosis result display module 222, so that a background monitoring person can know, in time, a fault on a device in an application scenario in which a user is located.

Still refer to FIG. 3. A smart detection application is pre-installed on each of the fault detection device 210 and the to-be-detected device 230, and the smart detection application may be used for information exchange and processing in a fault detection process.

Specifically, refer to FIG. 3. The smart detection application in the fault detection device 210 includes a distributed diagnosis module 211 and a distributed communications module 212.

For example, the distributed diagnosis module 211 may be configured to obtain a logical tree from the server 220. In an example, after being started (or activated), the distributed diagnosis module 211 may obtain one or more logical trees corresponding to a predefined application scenario in the server 220. For example, the server 220 stores a logical tree A corresponding to a home scenario and a logical tree B corresponding to a screen mirroring scenario. Correspondingly, the user may preset the home scenario and the screen mirroring scenario in the fault detection device 210, and the distributed diagnosis module 211 may obtain corresponding logical trees from the server 220 based on the defined scenarios, that is, the logical tree A corresponding to the home scenario and the logical tree B corresponding to the screen mirroring scenario. In another example, the distributed diagnosis module 211 may obtain only a trigger condition of each logical tree, and after detecting that the trigger condition is triggered, download the logical tree corresponding to the trigger condition from the server 220. This reduces memory occupation of the fault detection device.

For example, the distributed diagnosis module 211 is further configured to send the logical tree to the distributed communications module 212. In an example, the distributed diagnosis module 211 may interact with the distributed communications module 212 in the following manner: The distributed diagnosis module 211 successively sends an instruction and corresponding identification information of a to-be-detected device to the distributed communications module 212 based on a logical sequence of the logical tree, and each time after obtaining a feedback corresponding to a node, sends an instruction included in a next node to the distributed communications module 212. The logical tree in FIG. 4 is still used as an example. The distributed diagnosis module 211 sends the address information of the mobile phone and the instruction AA that are included in the first branch node 310 to the distributed communications module 212, and after receiving a response message returned by the distributed communications module 212, sends the information included in the child node 311 and the child node 312 to the distributed communications module 212. Optionally, after determining, based on the response message, that the fault event exists, the distributed diagnosis module 211 may no longer send an instruction in a child node under a node corresponding to the current instruction to the distributed diagnosis module 212. In another example, the distributed diagnosis module 211 may send, in sequence, the instructions included in the logical tree to the distributed communications module 212, and the distributed communications module 212 successively executes the corresponding instructions based on a receiving sequence, and feeds back a result to the distributed diagnosis module 211. The distributed diagnosis module 211 does not interrupt an execution process of each node in the logical tree until running of each node in the logical tree is completed.

For example, the distributed communications module 212 is configured to send an instruction to a to-be-detected device based on identification information of the to-be-detected device in response to the information received from the distributed diagnosis module 211, including the identification information of the to-be-detected device and the corresponding instruction. In addition, the distributed communications module 212 is further configured to receive a result returned by the to-be-detected device. Then, the distributed communications module 212 may send a response message to the distributed diagnosis module 211, where the response message includes the result returned by the to-be-detected device. Optionally, the response message may further include the identification information of the to-be-detected device and/or the instruction, so that the distributed diagnosis module 211 quickly locates the fault event. For example, if the result returned by the to-be-detected device includes the code 8003, in an example, the distributed communications module 212 may feed back a response message to the distributed diagnosis module 211, where the response message includes the code 8003, and the distributed diagnosis module 211 determines, by querying the logical tree, that a fault event corresponding to the code 8003 exists, that is, the data sending fault event of the mobile phone exists. In this detection manner, the distributed diagnosis module 211 needs to traverse the nodes in the logical tree and the identification information of the fault events that corresponds to the nodes. In another example, the response message may include the identification information of the to-be-detected device, that is, the address information of the mobile phone and the code 8003. The distributed diagnosis module 211 may find a corresponding branch based on the address information of the mobile phone, and then determine, by traversing the branch, a fault event corresponding to the code 8003. In still another example, the response message may include the instruction (that is, the instruction CC) and the code 8003, and optionally, may further include the identification information of the to-be-detected device. The distributed diagnosis module 211 may determine the child node 311 according to the instruction CC, and may determine, when detecting that the code 8003 included in the child node 311 exists, that the data sending fault event of the mobile phone exists.

For example, the smart detection application is also installed on the to-be-detected device 230. The smart detection application may perform a corresponding operation according to a received instruction sent by the fault detection device, and feed back an execution result. For an execution process of the to-be-detected device 320, refer to the conventional technology. Details are not described in this application.

Still refer to FIG. 3. For example, the distributed diagnosis module 211 may determine, based on the response message returned by the distributed communications module 212 and by traversing the logical tree, whether the identification information of the fault event exists, to further determine whether the fault event exists. Optionally, if the distributed diagnosis module 211 detects, based on a plurality of received response messages returned by the distributed communications module 212, that the fault event exists, the distributed diagnosis module 211 may send a detection stop instruction to the distributed communications module 212, to indicate to stop executing instructions corresponding to child nodes under the node to which the fault event belongs. It should be noted that, stopping executing an instruction in this application is stopping executing instructions corresponding to child nodes under a node to which the instruction belongs, and an instruction corresponding to another branch node parallel to the node may still be executed.

For example, the distributed diagnosis module 211 may be further configured to: when determining that the fault event exists, obtain a corresponding fault event description and/or a corresponding solution from the server 220. Optionally, the fault event description and/or the corresponding solution may also be included in a corresponding node in the logical tree, that is, the distributed diagnosis module 211 has obtained the fault event description and/or the corresponding solution in advance. Optionally, the distributed diagnosis module 211 may also report the identification information of the fault event to the server, to notify a background technician that the fault event exists.

In a possible implementation, the distributed diagnosis module 211 may further record identification information of a detection event, where the identification information is used to identify each detection event. That is, each time the distributed diagnosis module 211 performs fault detection based on the logical tree, the distributed diagnosis module 211 generates corresponding identification information of detection events, for example, a detection event 1 and a detection event 2. The distributed diagnosis module 211 may correspondingly store identification information of fault events that exists after each detection and the corresponding identification information of the detection events. For example, if the distributed diagnosis module 211 currently detects that identification information of a fault event exists, the distributed diagnosis module 211 may query, based on the identification information of the fault event, whether a detection event including the identification information of the fault event exists in some or all recorded detection events, and may feed back, to the server, identification information of the detection event that includes the identification information of the fault event and a current detection result, so that a technician can more accurately and quickly locate a cause for generating a same fault event for a plurality of times.

In conclusion, this application provides a joint detection manner. The fault detection device automatically queries statuses of a plurality of to-be-detected devices, and can quickly determine the fault event based on the logical tree, so that a fault that occurs in an application scenario can be accurately located. In addition, in this application, the fault detection device may further provide a fault solution, so that the user can independently resolve some problems, and a technician does not need to perform door-to-door maintenance, to reduce costs.

The technical solutions in the foregoing method embodiments are described below in detail by using several specific embodiments.

### Scenario 1

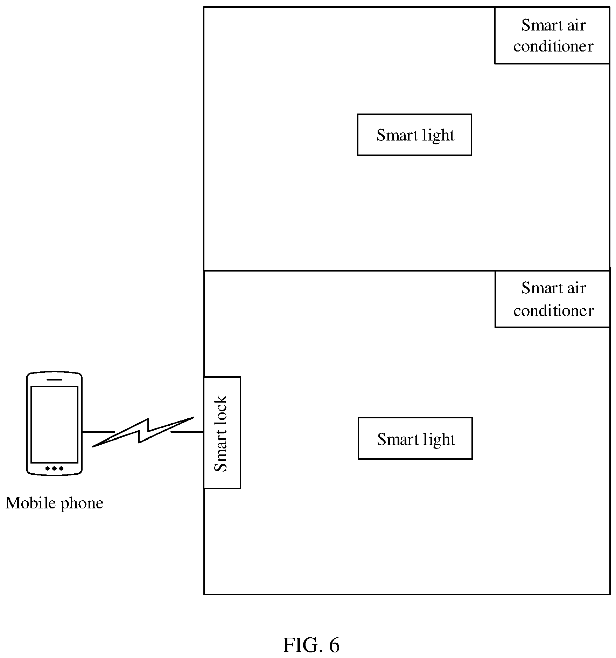

FIG. 6 is a schematic diagram of an example of an application scenario. Devices in the application scenario include a fault detection device, that is, a mobile phone, and to-be-detected devices, including an air conditioner, a smart lock, and a smart light. It should be noted that the devices in the application scenario are merely examples. This is not limited in this application.

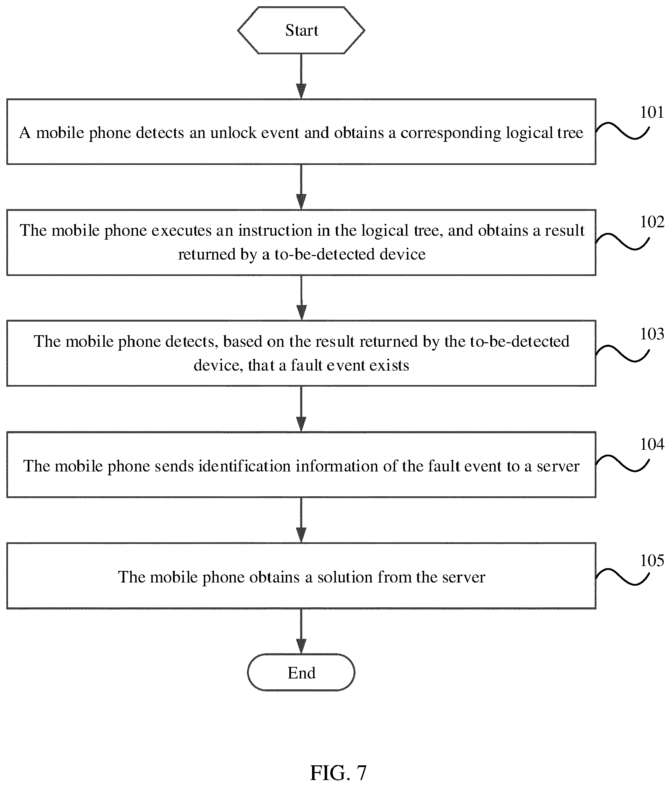

With reference to FIG. 6, FIG. 7 is a schematic flowchart of a fault detection method according to an embodiment of this application. FIG. 6 includes the following steps.

Step 101: A mobile phone detects an unlock event and obtains a corresponding logical tree.

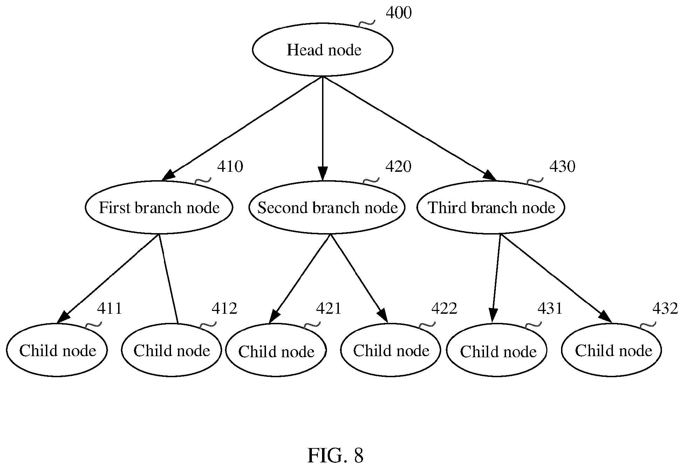

For example, in this embodiment, the mobile phone has obtained a logical tree A and a logical tree B from a server (not shown in the figure). The logical tree A is shown in FIG. 4, and the logical tree B is shown in FIG. 8.

Refer to FIG. 8. The logical tree B includes a head node 400, a first branch node 410, a second branch node 420, and a third branch node 430. The first branch node 410 includes a child node 411 and a child node 412, and the second branch node 420 includes a child node 421 and a child node 422, and the third branch node 430 includes a child node 431 and a child node 432.

For example, the head node includes an application scenario name, a trigger condition, and identification information of to-be-detected devices. The application scenario name is home scenario, the trigger condition is an unlock event, and the identification information of the to-be-detected devices include identification information of a smart lock, identification information of a smart air conditioner, and identification information of a smart light. The first branch node 410 includes the identification information of the smart lock, identification information 8010 of a network-connected fault of the smart lock, and an instruction AAA used to query a network-connected status of the smart lock. The child node 411 includes the identification information of the smart lock, identification information 8040 of a data sending fault of the smart lock, and an instruction DDD used to query a data sending status of the smart lock. The child node 412 includes the identification information of the smart lock, identification information 8050 of a hardware fault of the smart lock, and an instruction EEE used to query a log of the smart lock. The second branch node 420 includes the identification information of the smart light, identification information 8020 of a network-connected fault of the smart light, and an instruction BBB used to query a network-connected status of the smart light. The child node 421 includes the identification information of the smart light, identification information 8060 of a data receiving fault of the smart light, and an instruction FFF used to query a data receiving status of the smart light. The child node 422 includes the identification information of the smart light, identification information 8070 of a hardware fault of the smart light, and an instruction GGG used to query a log of the smart light. The third branch node 430 includes the identification information of the smart air conditioner, identification information 8030 of a network-connected fault of the smart air conditioner, and an instruction CCC used to query a network-connected status of the smart light. The child node 431 includes the identification information of the smart air conditioner, identification information 8080 of a data receiving fault of the smart air conditioner, and an instruction HHH used to query a data receiving status of the smart air conditioner. The child node 432 includes the identification information of the smart air conditioner, identification information 8090 of a hardware fault of the smart air conditioner, and an instruction III used to query a log of the smart air conditioner.

Specifically, in a process in which a user approaches a home door, the mobile phone carried by the user may automatically access a home local area network. The user may unlock the door by using a fingerprint or in another manner. After detecting an unlock instruction, the smart lock executes unlocking, and feeds back an unlock response message to the mobile phone. In addition, the smart lock further sends a start instruction to the smart air conditioner and the smart light in the application scenario. It should be noted that, in a normal case, the devices in this application scenario access a same wireless network, for example, a local area network or 5G, so that the devices can exchange information through wireless communication.

After receiving the unlock response message, the mobile phone determines that an unlock event exists, and extracts the locally stored logical tree B based on the trigger condition recorded in the head node 400 in the logical tree B.

Step 102: The mobile phone executes an instruction in the logical tree, and obtains a result returned by the to-be-detected device.

Specifically, in a normal case, after the smart lock sends the start instruction to the smart air conditioner and the smart light, the smart air conditioner and the smart light need to be automatically started based on a preset configuration. For example, the smart air conditioner starts cooling, and the smart light is turned on.

For example, in this embodiment, an example in which the air conditioner fails to be started normally is used for description. For example, after obtaining the logical tree B, the mobile phone may successively detect statuses of the to-be-detected devices based on a logical sequence of the logical tree B.

Step 103: The mobile phone detects, based on the result returned by the to-be-detected device, that a fault event exists.

Specifically, the mobile phone detects, based on the result returned by each to-be-detected device, whether identification information of the fault event exists. If the identification information of the fault event exists, the mobile phone determines that the fault event exists. If the identification information of the fault event does not exist, the procedure ends.

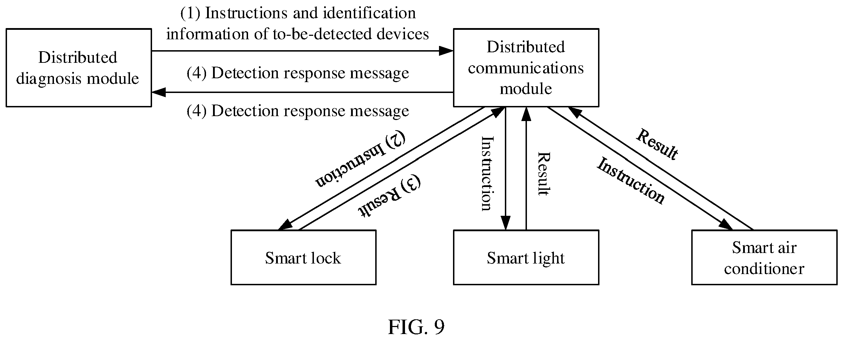

For example, FIG. 9 is a schematic flowchart of an example of a fault detection method. Refer to FIG. 9. The method specifically includes the following steps.
(1) A distributed diagnosis module sends instructions and identification information of to-be-detected devices to a distributed communications module.
   For example, the distributed diagnosis module sends, to the distributed communications module based on the logical sequence of the logical tree B, the instruction AAA and the identification information of the smart lock, the instruction BBB and the identification information of the smart light, and the instruction CCC and the identification information of the smart air conditioner.
(2) The distributed communications module executes the corresponding instructions based on the identification information of the to-be-detected devices.
   For example, after receiving the foregoing information, the distributed communications module sends the instruction AAA to the smart lock, sends the instruction BBB to the smart light, and sends the instruction CCC to the smart air conditioner.
(3) The to-be-detected devices return results.
   For example, after receiving the instructions, the smart lock, the smart light, and the smart air conditioner perform self-check according to the instructions, and return corresponding results. For specific detection details, refer to the conventional technology. This is not limited in this application.
(4) The distributed communications module sends a detection response message to the distributed diagnosis module.
   Specifically, the distributed communications module sends the detection response message to the distributed diagnosis module, where the response message includes the identification information of the to-be-detected devices and the corresponding results.
(5) The distributed diagnosis module detects, based on the received results, whether a fault event exists.

Specifically, the distributed diagnosis module receives the detection response message from the distributed communications module, obtains the identification information of the to-be-detected devices and the results in the detection response message, and determines, by traversing the logical tree, whether identification information of the fault event exists. For example, in this embodiment, the distributed diagnosis module does not detect the identification information of the fault event based on the currently received results of the to-be-detected devices, that is, determines that network-connected statuses of the to-be-detected device are normal.

Then, each module repeats step (1) to step (5), that is, successively executes the instructions in the child node 411, the child node 412, the child node 421, the child node 422, the child node 431, and the child node 432 in the logical tree B, and performs detection. For example, in this embodiment, code 8090 exists in a log returned by the smart air conditioner. When detecting that the fault code 8090 exists, the distributed diagnosis module determines that a hardware fault event of the smart air conditioner exists.

Step 104: The mobile phone sends the identification information of the fault event to the server.

For example, in this embodiment, after detecting that the identification information of the fault event exists, that is, the code 8090 exists, the distributed diagnosis module sends the code 8090 to the server.

Step 105: The mobile phone obtains a solution from the server.

For example, in this embodiment, after receiving the code 8090, the server may give an alarm to a background technician. After determining, based on the code 8090, that the hardware fault event of the smart air conditioner exists, the background technician may provide a corresponding solution. For example, the solution is to notify a worker to perform repair and provide contact information of the worker. The server sends the solution to the mobile phone. After receiving the solution, the mobile phone may display the solution on a screen, so that a user can check a device problem in a current application scenario without requiring the worker, and obtain the corresponding solution after detecting that the fault event exists.

### Scenario 2

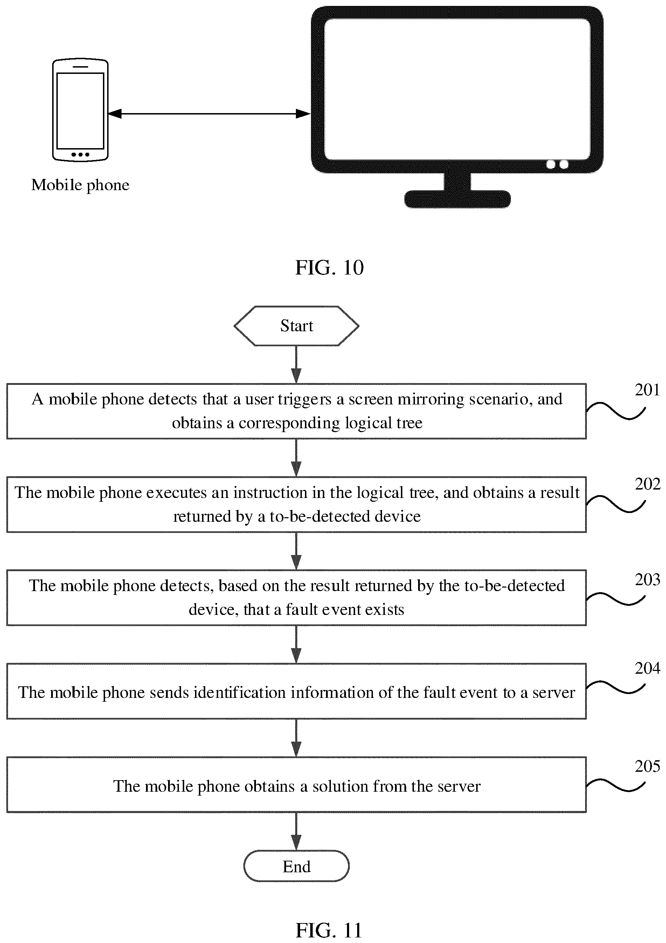

FIG. 10 is a schematic diagram of an example of an application scenario. Devices in the application scenario include a fault detection device, that is, a mobile phone, and to-be-detected devices, including the mobile phone and a smart television (or may be referred to as a large screen). It should be noted that the devices in the application scenario are merely examples. This is not limited in this application.

With reference to FIG. 10, FIG. 11 is a schematic flowchart of a fault detection method. FIG. 11 includes the following steps.

Step 201: A mobile phone detects that a user triggers a screen mirroring scenario, and obtains a corresponding logical tree.

For example, in this embodiment, the user may select screen mirroring scenario detection in an interface of the mobile phone. As shown in FIG. 5, after detecting an instruction delivered by the user, the mobile phone determines that the user triggers screen mirroring scenario detection, and obtains a logical tree B corresponding to the screen mirroring scenario.

For other details, refer to the foregoing descriptions. Details are not described herein again.

Step 202: The mobile phone executes an instruction in the logical tree, and obtains a result returned by a to-be-detected device.

For example, in this embodiment, the mobile phone is also the to-be-detected device. To be specific, in a screen mirroring application scenario, screen mirroring may fail because of a fault of the mobile phone.

It should be noted that, in this embodiment, the distributed communications module may obtain, through wireless communication, a result returned by a television, and may further perform self-check on the mobile phone by invoking a local interface of the mobile phone. For example, the distributed communications module may send an instruction to a processor in the mobile phone, and the processor executes a responded query instruction and feeds back a query result to the distributed communications module.

For other details, refer to the foregoing descriptions. Details are not described herein again.

Step 203: The mobile phone detects, based on the result returned by the to-be-detected device, that a fault event exists.

For example, in this embodiment, with reference to FIG. 3 and FIG. 4, specific detection steps are included.
(1) The distributed diagnosis module sends information about the first branch node 310 and information about the second branch node 320 to the distributed communications module, where the information includes the address information of the mobile phone, the instruction AA, the address information of the television, and the instruction BB.
(2) The distributed communications module detects that the mobile phone is a fault detection device, and directly invokes the instruction AA. The mobile phone executes the instruction AA, and returns a result to the distributed communications module. In addition, the distributed communications module executes the instruction BB based on the address information of the television, and the television returns an execution result according to the received instruction.
(3) The distributed communications module receives the result returned by the mobile phone and the result returned by the television.
(4) The distributed communications module sends the result returned by the mobile phone and the result returned by the television to the distributed diagnosis module.
(5) The distributed diagnosis module does not find any identification information of a fault event by traversing the logical tree, that is, determines that a network-connected status of the mobile phone is normal, and a network-connected status of the television is normal.
(6) The distributed diagnosis module sends information about the child node 311 and information about the child node 312 to the distributed communications module, where the information includes the address information of the mobile phone, the instruction CC, the address information of the television, and the instruction DD.
(7) The distributed communications module invokes the instruction CC. The mobile phone executes the instruction, and returns a result to the distributed communications module. In addition, the distributed communications module executes the instruction DD based on the address information of the television, and the television returns an execution result according to the received instruction. For example, in this embodiment, the result returned by the television includes code 8004.
(8) The distributed diagnosis module traverses the logical tree. For example, the mobile phone detects the code 8004, that is, determines that a data receiving status of the television is abnormal, and determines that a data sending status of the mobile phone is abnormal.

Optionally, the distributed diagnosis module detects whether a fault description and/or a solution corresponding to a data receiving fault event of the television are/is stored locally. For example, in this embodiment, the mobile phone does not store the foregoing information, and the mobile phone performs step 204, that is, requests a solution from a server.

For other details, refer to the foregoing descriptions. Details are not described herein again.

Step 204: The mobile phone sends the identification information of the fault event to the server.

Step 205: The mobile phone obtains the solution from the server.

For step 203 to step 205, refer to the foregoing descriptions. Details are not described herein again.

The foregoing mainly describes, from a perspective of interaction between network elements, the solutions provided in embodiments of this application. It may be understood that, to implement the foregoing functions, the fault detection device includes a corresponding hardware structure and/or a software module for implementing each function. A person skilled in the art should be easily aware that, units and algorithm steps in the examples described with reference to embodiments disclosed in this specification can be implemented by hardware or a combination of hardware and computer software in embodiments of this application. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the fault detection device may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that, in embodiments of this application, division into the modules is an example, is merely logical function division, and may be other division in an actual implementation.

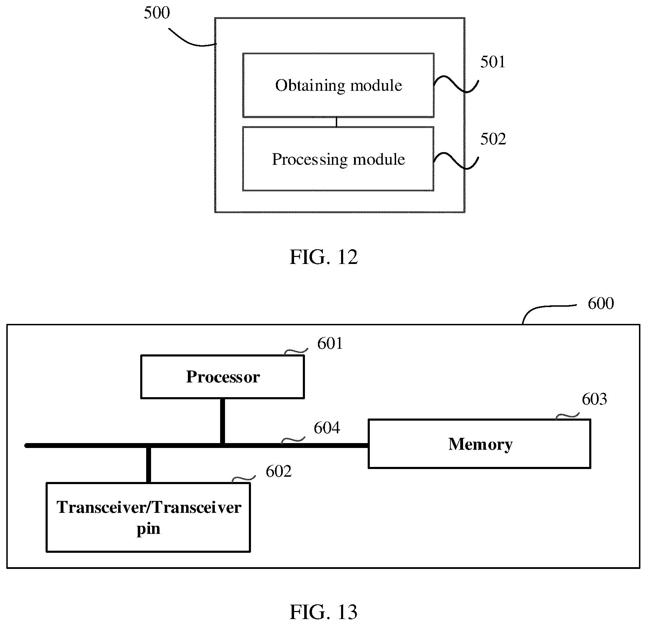

When each functional module is obtained through division based on each corresponding function, FIG. 12 is a possible schematic diagram of a structure of a fault detection device 500 in the foregoing embodiments. As shown in FIG. 12, the fault detection device may include an obtaining module 501 and a processing module 502. The obtaining module 501 is configured to obtain first detection logic, where the first detection logic includes a plurality of detection events and is used to indicate a logical relationship between the plurality of detection events, a single detection event includes identification information of a to-be-detected device, a detection instruction, and identification information of a fault event, and identification information of to-be-detected devices that is in the plurality of detection events is partially the same. The processing module 502 is configured to: in response to the obtained first detection logic, successively execute corresponding detection instructions on to-be-detected devices in single detection events based on the logical relationship between the plurality of detection events, and receive an execution result returned by the to-be-detected device. The processing module 502 is further configured to: if it is detected that the execution result includes the identification information of the fault event, determine that the fault event exists.

In a possible implementation, the obtaining module 501 is specifically configured to: receive a plurality of pieces of second detection logic from a server and store the plurality of pieces of second detection logic, where the first detection logic is included in the plurality of pieces of second detection logic, and each piece of single second detection logic includes a trigger condition and the plurality of detection events; and locally obtain one or more pieces of second detection logic if it is detected that one or more trigger conditions of the one or more pieces of second detection logic are triggered.

In a possible implementation, the single detection event further includes a solution corresponding to the fault event, and the processing module 502 is specifically configured to: obtain, based on the identification information of the fault event, the solution corresponding to the fault event; and display the solution.

In a possible implementation, the processing module 502 is further configured to: indicate to a server that the fault event exists; receive a solution that corresponds to the fault event and that is sent by the server; and display the solution.

In a possible implementation, the first detection logic is a first detection logical tree, or the first detection logic is a first detection logic list.

In another example, FIG. 13 is a schematic block diagram of a fault detection device 600 according to an embodiment of this application. The fault detection device may include a processor 601 and a transceiver/transceiver pin 602, and optionally, further includes a memory 603. The processor 601 may be configured to perform the steps performed by the fault detection device in the methods in the foregoing embodiments, to control a receive pin to receive a signal and control a transmit pin to send a signal.

The components of the fault detection device 600 are coupled together through a bus 604. In addition to a data bus, the bus system 604 further includes a power bus, a control bus, and a status signal bus. However, for clear description, various types of buses in the figure are marked as the bus system 604.

Optionally, the memory 603 may be configured to store instructions in the foregoing method embodiments.

It should be understood that the fault detection device 600 in this embodiment of this application may correspond to the fault detection device in the methods of the foregoing embodiments, and the foregoing and other management operations and/or functions of the components in the fault detection device 600 are intended to implement corresponding steps in the foregoing methods. For brevity, details are not described herein again.

All related content of the steps in the foregoing method embodiments may be cited in function descriptions of corresponding functional modules. Details are not described herein again.

Based on a same technical concept, an embodiment of this application further provides a computer-readable storage medium. The computer-readable storage medium stores a computer program, the computer program includes at least one segment of code, and the at least one segment of code may be executed by a fault detection device, to control the fault detection device to implement the foregoing method embodiments.

Based on a same technical concept, an embodiment of this application further provides a computer program. When the computer program is executed by a fault detection device, the computer program is used to implement the foregoing method embodiments.

The program may be all or partially stored in a storage medium that is encapsulated with a processor, or may be all or partially stored in a memory that is not encapsulated with a processor.

Based on a same technical concept, an embodiment of this application further provides a processor. The processor is configured to implement the foregoing method embodiments. The processor may be a chip.

Methods or algorithm steps described with reference to content disclosed in embodiments of this application may be implemented by hardware, or may be implemented by a processor executing software instructions. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well-known in the art. For example, a storage medium is coupled to a processor, so that the processor can read information from the storage medium or write information into the storage medium. Certainly, the storage medium may be a component of the processor. The processor and the storage medium may be located in an ASIC. In addition, the ASIC may be located in a network device. Certainly, the processor and the storage medium may exist in the network device as discrete components.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in the computer-readable medium. The computer-readable medium includes a computer storage medium and a communications medium, and the communications medium includes any medium that enables a computer program to be transmitted from one place to another. The storage medium may be any available medium accessible to a general-purpose computer or a dedicated computer.

## Claims

1. A fault detection method, applied to a fault detection device, comprising:
obtaining first detection logic (101), wherein the first detection logic comprises a plurality of detection events and is used to indicate a logical relationship between the plurality of detection events, a single detection event comprises identification information of a to-be-detected device, a detection instruction, and identification information of a fault event, and identification information of to-be-detected devices that is in the plurality of detection events is partially the same;
in response to the obtained first detection logic, successively executing corresponding detection instructions on to-be-detected devices in single detection events based on the logical relationship between the plurality of detection events, and receiving an execution result returned by each to-be-detected device (102); and
if it is detected that the execution result comprises the identification information of the fault event, determining that the fault event exists (103);
wherein the fault detection device and the to-be-detected devices are different devices.

2. The method according to claim **1,** wherein the obtaining detection logic comprises:
receiving a plurality of pieces of second detection logic from a server and storing the plurality of pieces of second detection logic, wherein the first detection logic is comprised in the plurality of pieces of second detection logic, and each piece of single second detection logic comprises a trigger condition and the plurality of detection events; and
locally obtaining one or more pieces of second detection logic if it is detected that one or more trigger conditions of the one or more pieces of second detection logic are triggered.

3. The method according to claim **1,** wherein the single detection event further comprises a solution corresponding to the fault event, and the method further comprises:
obtaining, based on the identification information of the fault event, the solution corresponding to the fault event; and
displaying the solution.

4. The method according to claim 1, wherein the method further comprises:
indicating to a server that the fault event exists;
receiving a solution that corresponds to the fault event and that is sent by the server; and
displaying the solution.

5. The method according to claim 1, wherein
the first detection logic is a first detection logical tree; or
the first detection logic is a first detection logic list.

6. A fault detection device, comprising:
a memory and a processor, wherein the memory is coupled to the processor; and
the memory stores program instructions, and when the program instructions are executed by the processor, the program instructions cause the processor of the fault detection device to perform the method according to any one of claim 1-5.

7. A fault detection system, including the fault detection device according to claim 6 and a to-be-detected device.

8. A computer-readable storage medium, wherein the computer-readable storage medium is configured to store a computer program, which, when being run on a computer, causes the computer to perform the method according to any one of claims 1 to 5.

## Patentansprüche

1. Fehlererfassungsverfahren, das auf eine Fehlererfassungsvorrichtung angewendet wird, das umfasst:
Erhalten einer ersten Erfassungslogik (101), wobei die erste Erfassungslogik eine Vielzahl von Erfassungsereignissen umfasst und verwendet wird, um eine logische Beziehung zwischen der Vielzahl von Erfassungsereignissen anzugeben, ein einzelnes Erfassungsereignis Identifikationsinformationen einer zu erfassenden Vorrichtung, eine Erfassungsanweisung und Identifikationsinformationen eines Fehlerereignisses umfasst, und Identifikationsinformationen von zu erfassenden Vorrichtungen, die in der Vielzahl von Erfassungsereignissen vorhanden sind, teilweise gleich sind;
als Reaktion auf die erhaltene erste Erfassungslogik, sukzessives Ausführen entsprechender Erfassungsanweisungen auf zu erfassenden Vorrichtungen in einzelnen Erfassungsereignissen basierend auf der logischen Beziehung zwischen der Vielzahl von Erfassungsereignissen, und Empfangen eines Ausführungsergebnisses, das durch jede zu erfassende Vorrichtung (102) zurückgegeben wird; und
falls erfasst wird, dass das Ausführungsergebnis die Identifikationsinformationen des Fehlerereignisses umfasst, Bestimmen, dass das Fehlerereignis vorliegt (103);
wobei die Fehlererfassungsvorrichtung und die zu erfassenden Vorrichtungen unterschiedliche Vorrichtungen sind.

2. Verfahren nach Anspruch 1, wobei das Erhalten der Erfassungslogik umfasst:
Empfangen einer Vielzahl von Teilen einer zweiten Erfassungslogik von einem Server und Speichern der Vielzahl von Teilen der zweiten Erfassungslogik, wobei die erste Erfassungslogik in der Vielzahl von Teilen der zweiten Erfassungslogik umfasst ist, und jedes Teil einer einzelnen zweiten Erfassungslogik eine Auslösebedingung und die Vielzahl von Erfassungsereignissen umfasst; und
lokales Erhalten eines oder mehrerer Teile der zweiten Erfassungslogik, falls erfasst wird, dass eine oder mehrere Auslösebedingungen des einen oder der mehreren Teile der zweiten Erfassungslogik ausgelöst werden.

3. Verfahren nach Anspruch 1, wobei das einzelne Erfassungsereignis ferner eine dem Fehlerereignis entsprechende Lösung umfasst, und das Verfahren ferner umfasst:
Erhalten, basierend auf den Identifikationsinformationen des Fehlerereignisses, der dem Fehlerereignis entsprechenden Lösung; und
Anzeigen der Lösung.

4. Verfahren nach Anspruch 1, wobei das Verfahren ferner umfasst:
Angeben, an einen Server, dass das Fehlerereignis vorliegt;
Empfangen einer Lösung, die dem Fehlerereignis entspricht und die durch den Server gesendet wird; und
Anzeigen der Lösung.

5. Verfahren nach Anspruch 1, wobei
die erste Erfassungslogik ein erster logischer Erfassungsbaum ist; oder
die erste Erfassungslogik eine erste Erfassungslogikliste ist.

6. Fehlererfassungsvorrichtung, die umfasst:
einen Speicher und einen Prozessor, wobei der Speicher mit dem Prozessor gekoppelt ist; und
der Speicher Programmanweisungen speichert, und wenn die Programmanweisungen durch den Prozessor ausgeführt werden, die Programmanweisungen den Prozessor der Fehlererfassungsvorrichtung veranlassen, das Verfahren nach einem der Ansprüche 1 bis 5 durchzuführen.

7. Fehlererfassungssystem, einschließlich der Fehlererfassungsvorrichtung nach Anspruch 6 und einer zu erfassenden Vorrichtung.

8. Computerlesbares Speicherungsmedium, wobei das computerlesbare Speicherungsmedium konfiguriert ist, um ein Computerprogramm zu speichern, das, wenn es auf einem Computer laufen gelassen wird, den Computer veranlasst, das Verfahren nach einem der Ansprüche 1 bis 5 durchzuführen.

## Revendications

1. Procédé de détection de défaillance, appliqué à un dispositif de détection de défaillance, comprenant :
l'obtention d'une première logique de détection (101), dans lequel la première logique de détection comprend une pluralité d'événements de détection et est utilisée pour indiquer une relation logique entre la pluralité d'événements de détection, un événement de détection unique comprend des informations d'identification d'un dispositif à détecter, une instruction de détection et des informations d'identification d'un événement de défaillance, et les informations d'identification de dispositifs à détecter qui font partie de la pluralité d'événements de détection sont partiellement identiques ;
en réponse à la première logique de détection obtenue, l'exécution successive d'instructions de détection correspondantes sur des dispositifs à détecter dans des événements de détection uniques sur la base de la relation logique entre la pluralité d'événements de détection, et la réception d'un résultat d'exécution renvoyé par chaque dispositif à détecter (102) ; et
s'il est détecté que le résultat d'exécution comprend les informations d'identification de l'événement de défaillance, le fait de déterminer que l'événement de défaillance existe (103) ;
dans lequel le dispositif de détection de défaillance et les dispositifs à détecter sont des dispositifs différents.

2. Procédé selon la revendication 1, dans lequel l'obtention de logique de détection comprend :
la réception d'une pluralité d'éléments de seconde logique de détection en provenance d'un serveur et le stockage de la pluralité d'éléments de seconde logique de détection, dans lequel la première logique de détection est comprise dans la pluralité d'éléments de seconde logique de détection, et chaque élément de seconde logique de détection unique comprend une condition de déclenchement et la pluralité d'événements de détection ; et
l'obtention localement d'un ou plusieurs éléments de seconde logique de détection s'il est détecté qu'une ou plusieurs conditions de déclenchement du ou des éléments de seconde logique de détection sont déclenchées.

3. Procédé selon la revendication 1, dans lequel l'événement de détection unique comprend en outre une solution correspondant à l'événement de défaillance, et le procédé comprend en outre :
l'obtention, sur la base des informations d'identification de l'événement de défaillance, de la solution correspondant à l'événement de défaillance ; et
l'affichage de la solution.

4. Procédé selon la revendication 1, dans lequel le procédé comprend en outre :
l'indication à un serveur que l'événement de défaillance existe ;
la réception d'une solution qui correspond à l'événement de défaillance et qui est envoyée par le serveur ; et
l'affichage de la solution.

5. Procédé selon la revendication 1, dans lequel
la première logique de détection est un premier arbre logique de détection ; ou
la première logique de détection est une première liste logique de détection.

6. Dispositif de détection de défaillance, comprenant :
une mémoire et un processeur, dans lequel la mémoire est couplée au processeur ; et
la mémoire stocke des instructions de programme, et lorsque les instructions de programme sont exécutées par le processeur, les instructions de programme amènent le processeur du dispositif de détection de défaillance à réaliser le procédé selon l'une quelconque des revendications 1 à 5.

7. Système de détection de défaillance, comportant le dispositif de détection de défaillance selon la revendication 6 et un dispositif à détecter.

8. Support de stockage lisible par ordinateur, dans lequel le support de stockage est configuré pour stocker un programme informatique qui, lorsqu'il est exécuté sur un ordinateur, amène l'ordinateur à réaliser le procédé selon l'une quelconque des revendications 1 à 5.
